# FASCICULE DE BREVET EUROPEEN

(11) **EP 2 357 386 B1**
(45) Date de publication et mention de la délivrance du brevet: **06.04.2016**
(21) Numéro de dépôt: 11153712.2
(22) Date de dépôt: 08.02.2011
(51) Int. Cl.: F16K 1/44

(54) **DISPOSITIF VANNE MULTIVOIES POUR LA CIRCULATION DE FLUIDES**
MEHRWEGVENTIL FÜR FLUIDZIRKULIERUNG
MULTIPLE WAY VALVE FOR FLUID CIRCULATION

(30) Priorité: 09.02.2010 FR 1000536
(43) Date de publication de la demande: 17.08.2011
(73) Titulaire: DEFINOX SAS, 44190 Getigne (FR)
(72) Inventeur: Fontenit, Sébastien, 85130 La Gaubretiere (FR); Picot, Thierry, 44330 Vallet (FR)
(74) Mandataire: Alfa Laval Attorneys

(56) Documents cités:
- WO-A1-98/41786
- WO-A1-2007/054131
- US-A1- 2009 065 077

## Description

L'invention concerne un dispositif vanne comprenant une première et une seconde voies de circulation de fluides. Typiquement, il s'agit de liquides, dès lors que ce type de dispositif est beaucoup utilisé dans l'industrie alimentaire, pour la circulation de liquides alimentaires, tels du lait et du yaourt.

De façon connue, un tel dispositif comprend une première et une seconde voies pour les fluides. Ces voies sont ou non mises en communication en fonction de la position d'une vanne mobile montée entre elles.

La vanne ainsi disposée autorise ou interdit cette communication afin de permettre aux fluides qui y circulent soit de se mélanger, soit, au contraire, de circuler sans mélange.

De surcroît, le dispositif précité ici concerné est tel que la vanne mobile comprend un premier et un second clapets dont l'un appartient à un corps mobile creux traversé par une chambre de fuite et qui sont conçus et montés pour :
- interdire une communication entre les première et seconde voies, dans une position fermée de la vanne,
- autoriser une communication entre les première et seconde voies, autour des premier et second clapets, dans une position ouverte de la vanne,
- interdire la communication entre lesdites première et seconde voies, tout en autorisant une communication entre l'une seulement de ces voies et la chambre de fuite, dans deux situations de nettoyage possibles.

Ainsi, trois modes de fonctionnement sont prévus :
- les voies reçoivent des fluides en circulation qui ne se mélangent pas entre les voies ; la vanne est fermée,
- lesdits fluides qui circulent entrent en contact ; la vanne est ouverte, les deux clapets fermés (en appui l'un contre l'autre),
- les fluides en circulation ne se mélangent pas entre les voies, mais l'un (seulement) des clapets est ouvert, ce qui permet un nettoyage/lavage de l'une de ces voies, en faisant communiquer le fluide de cette voie (typiquement un liquide de nettoyage ou rinçage) avec une évacuation vers l'extérieur, typiquement par mise en communication entre ladite voie et l'intérieur du second clapet (chambre de fuite).

Parmi les problèmes sur de tels dispositifs vanne, on peut noter ce qui suit :
- la nécessité de prévoir différents types de joints, en particulier pour l'étanchéité entre les clapets,
- une réalisation complexe des clapets, voire de la vanne dans son ensemble,
- des coûts de réalisation et/ou de maintenance élevés,
- une complication structurelle des vannes en vue de satisfaire à l'exigence précitée de double étanchéité,
- une sécurité d'étanchéité entre les voies, en particulier lors des nettoyages.

Ce dernier problème est pris en compte dans WO2007054131 ou US/2009008594 : Une excroissance annulaire 29 de la paroi intérieure du corps fixe dans lequel est monté mobile la vanne doit permettre de diriger le fluide, tel un liquide de nettoyage, vers le centre de la chambre intérieure 3d du corps mobile creux 38 auquel appartient le second clapet 3. Ceci complique la fabrication du dispositif, y compris le premier clapet qui comporte un bec 4" pour l'étanchéité avec l'excroissance 29.

Dans US/20090065077, il est encore proposé qu'un élément barrière 54,54a...54d soit interposé entre les premier et second clapets pour protéger le clapet opposé à celui qui s'ouvre en position de nettoyage : Si par exemple seul le premier clapet 28,28a... s'ouvre, l'élément barrière 54,54a...54d reçoit le jet de fluide en premier et forme coupe-jet pour le second clapet (clapet opposé) 30, 30a....

Vis-à-vis de cette situation, certains problèmes de fuite peuvent demeurer, notamment dans des situations de turbulences à l'endroit des clapets, lorsque le fluide s'écoule vers la chambre de fuite, suivant les pressions exercées, voire suivant les fluides concernés, ou encore en fonction de l'emplacement de certaines pièces du dispositif ou de la forme donnée à celles-ci.

Au moins pour résoudre cette difficulté, il est ici proposé que le dispositif vanne comprenne un troisième clapet disposé entre les premier et second clapets et qui vient en liaison étanche, dans la première situation de nettoyage, avec le premier clapet et, dans la seconde situation de nettoyage, avec le second clapet.

Pour simplifier la réalisation, on conseille que le troisième clapet soit monté, libre de mouvement en position(s) de nettoyage, entre les premier et second clapets, lesquels sont déplaçables sous la commande de moyens actionneurs, le troisième clapet étant guidé dans ses mouvements par appui contre le premier ou second clapet.

Pour réduire au maximum les remous lors des nettoyage, tout en favorisant à nouveau la simplicité de réalisation, on conseille encore que, la vanne étant mobile suivant un axe, le troisième clapet soit annulaire et guidé en mouvement suivant ledit axe, (uniquement) par sa périphérie extérieure, en particulier par contact radial avec l'un des premier et second clapets.

De préférence, on conseille même que ladite vanne, étant montée suivant un axe, le troisième clapet, annulaire, sera guidé en libre mouvement suivant cet axe, vers sa périphérie extérieure, par :
- le contact radial précité, et,
- en situations de nettoyage et par une liaison étanche glissante, avec une paroi intérieure du corps fixe dans lequel la vanne est montée mobile.

Pour les mêmes buts et parfaire l'étanchéité entre clapets, on prévoit par ailleurs favorablement que le les premier et second clapets seront en métal, le troisième clapet étant en, ou comprenant en surface, une matière plastique adaptée à assurer une étanchéité auxdits fluides par appui étanche sans joint, dans les deux situations de nettoyage, contre le premier et le second clapets, respectivement.

Ainsi, on pourra se dispenser de joints entre les clapets.

A noter que les caractéristiques qui précèdent pourraient faire l'objet d'une ou plusieurs demandes de protections indépendantes.

Les caractéristiques qui suivent peuvent compléter cette solution, en combinaison ou alternative :
- le troisième clapet est en Peek (polyétheréthercétone),
- les premier et second clapets sont mobiles entre les dites positions, suivant un axe commun de déplacement, et le troisième clapet disposé entre eux est pourvu de becs de centrage en périphérie extérieure, de manière à venir extérieurement en appui localisé contre la périphérie intérieure du second clapet qui appartient au corps creux,

- les premier, second et troisième clapets comprennent chacun un seul joint d'étanchéité, ces trois joints étant identiques et montés respectivement sur une tranche périphérique de chaque clapet, pour l'étanchéité entre chacun d'eux et un corps extérieur fixe dans lequel la vanne est montée mobile,
- le troisième clapet présente une gorge sur sa tranche périphérique extérieure où est disposé un joint pour, tant en position fermée qu'en situations de nettoyage, assurer une étanchéité audit fluide par contact avec le corps extérieur fixe dans lequel se déplace la vanne,
- les premier, second et troisième clapets comprennent chacun un joint d'étanchéité, chacun monté sur une tranche périphérique d'un desdits clapets et les diamètres extérieurs des premier et troisième clapets sont identiques, de même que ceux de leurs joints, ceux respectivement du second clapet et de son joint étant inférieurs.

De telles caractéristiques pourraient elles aussi faire l'objet d'une ou plusieurs demandes de protections indépendantes.

A noter qu'avec les becs de centrage, le guidage du troisième clapet va pouvoir être très efficace de façon simple, ceci étant bien entendu favorable à l'étanchéité recherchée.

A ce sujet, on notera encore qu'en synthèse, pour favoriser au mieux la sécurité recherchée vis-à-vis de cette étanchéité en situations de nettoyage, on recommandera finalement, en combinaison :
- que le troisième clapet comprenne ladite matière plastique permettant, sous la pression du fluide entrant dans la chambre de fuite, son appui étanche, sans joint et dans les deux situations de nettoyage, contre les premier ou second clapets, respectivement,
- que, les premier et second clapets étant déplaçables sous la commande de moyens actionneurs, le troisième clapet soit monté libre de mouvement entre eux, dans les deux situations de nettoyage,
- et que, dans ces situations, ce troisième clapet soit lié périphériquement de façon étanche au fluide de nettoyage avec le corps extérieur fixe dans lequel la vanne est donc montée.

A noter encore que le troisième clapet pourrait aussi, en lui-même, faire l'objet d'une demande de protection indépendante, dès lors qu'il est adaptable sur au moins un type existant de dispositif vanne.

Avec une telle solution à trois clapets, la solution de l'invention se démarque notablement des solutions de US/2009008594, WO98/41789 ou US/20090065077 où sont présentées exclusivement des « double seat valves » (clapets à sièges double). US/20090065077 exclut même explicitement toute solution à trois clapets d'étanchéité, en situations de nettoyage, lorsqu'un fluide de nettoyage doit être évacué dans une chambre de fuite et que des risques de fuite existent alors tant en périphérie extérieure (contact avec le corps extérieur fixe) qu'à l'endroit du clapet fermé (premier ou second suivant le nettoyage en cours).

Une description d'un mode de réalisation présenté en référence aux dessins d'accompagnement suit. Ces dessins montrent, avec une réalité fonctionnelle :
- figures 1, 3, 5, 7 un dispositif vanne multivoies dans son ensemble avec, figure 1 : la vanne ouverte et donc circulation de fluide entre les deux voies, figure 3 : la vanne fermée et donc circulation possible de fluides dans les voies, indépendamment, sans mélange possible, figure 5 : ouverture (battement) du second clapet (inférieur) pour nettoyage de la seconde voie et de la chambre interne de fuite, et figure 7 : ouverture (battement) du premier clapet (supérieur) pour nettoyage de la première voie et de la chambre interne de fuite ;
- figures 2, 4, 6, 8 les agrandissements locaux entourés sur les figures 1, 3, 5, 7, respectivement,
- figure 9, une perspective de l'anneau où est formé le troisième clapet,
- figures 10-13, des vues agrandies des figures 2, 4, 6, 8, respectivement,
- figure 14, une vue encore agrandie de la figure 4,
- figure 15, une coupe verticale de la structure porteuse du second clapet (coupe passant par l'axe de translation des clapets de la vanne),
- figure 16, une coupe partielle suivant XVI-XVI de la figure 9,
- figures 17-19, une coupe encore agrandie des clapets respectivement en position fermée, puis première et enfin seconde situations de nettoyage, et,
- figure 20, plusieurs exemples de dispositions des voies.

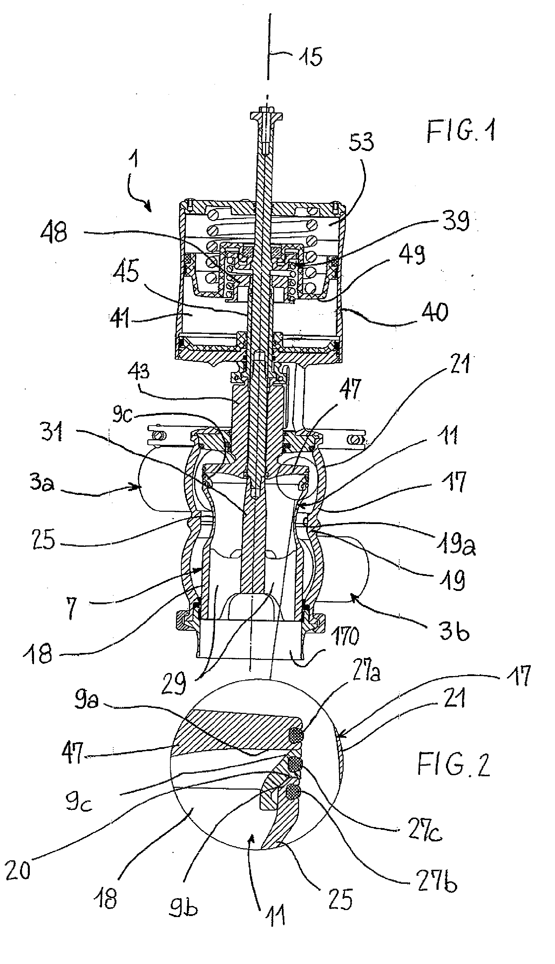

Figures 1, 3, 5, 7 notamment, on voit un dispositif vanne multivoies 1 à clapets indépendants, pour la circulation de fluides.

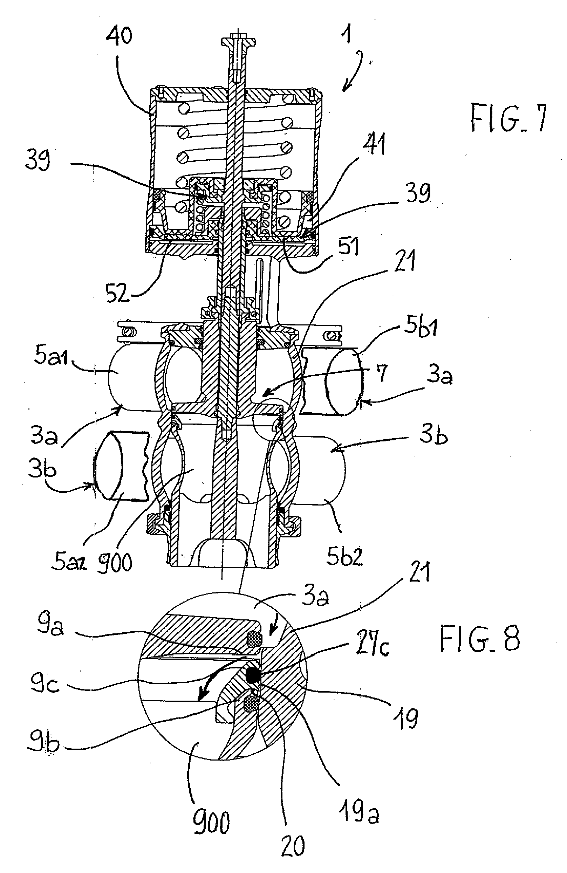

Un tel dispositif s'utilise en particulier avec des fluides alimentaires. Il comprend une première voie 3a et une seconde voie 3b. Ici, chacune présente une entrée et une sortie (5a1, 5b1, 5a2, 5b2 ; figure 7) pour les fluides. Les deux voies sont ou non mises en communication en fonction de la position d'une vanne 7 mobile. La vanne est montée entre les deux voies. Elle comprend un premier clapet 9a, un second clapet 9b et un troisième clapet 9c disposé entre les deux autres.

L'élément structurel 11 auquel appartient le second clapet 9b est creux. Ce dernier et le premier clapet 9a sont en métal. Il peut s'agir d'acier.

Pour le fonctionnement de la vanne, chaque clapet 9a, 9b, 9c est ici monté mobile suivant un axe central vertical commun 15, qui est donc celui de déplacement de la vanne entre ses différentes positions opérationnelles précitées, à l'intérieur du corps extérieur fixe 17 pourvu des voies 3a, 3b.

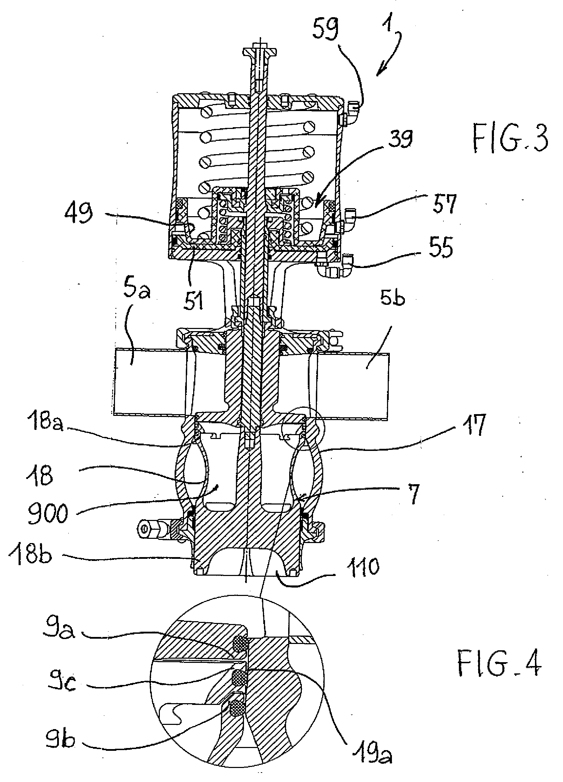

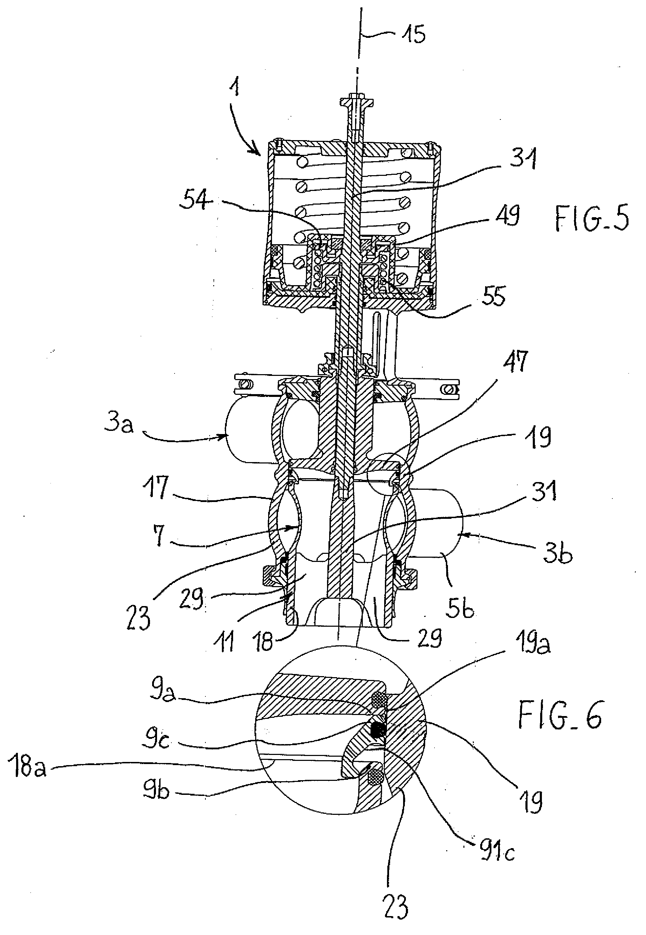

Précisément, les trois clapets vont permettre :
- d'interdire une communication entre les première et seconde voies, dans une position fermée de la vanne (figures 3, 4 où il peut par contre y avoir libres circulations indépendantes entre les entrée/sortie 5a1, 5b1, d'une part, et 5a2, 5b2 d'autre part),
- d'autoriser une communication entre les première et seconde voies 3a, 3b, autour des trois clapets, par déplacement commun, en position ouverte de la vanne (figures 1, 2),
- interdire la communication entre lesdites première et seconde voies 3a, 3b, tout en autorisant une communication entre l'une seulement de ces voies et la chambre de fuite 900 du second clapet, dans les deux situations possibles de nettoyage (figures 6 et 8).

Comme déjà indiqué, le troisième clapet 9c sera en, ou comprendra en surface, une matière plastique adaptée à assurer une étanchéité vis-à-vis des fluides en circulation, par appui contre les premier et/ou second clapets, en position fermée de la vanne (figure 4) et dans les deux situations de nettoyage (figures 6 et 8).

Sa matière plastique dure, mais compressible, sera favorablement du Peek.

Par ailleurs, et comme illustré, on conseille qu'il présente une forme générale annulaire, avec un diamètre extérieur (et intérieur) se resserrant du côté où ce troisième clapet s'engage avec le second clapet 9b, ici donc vers le bas (figures 1, 9, 10 notamment).

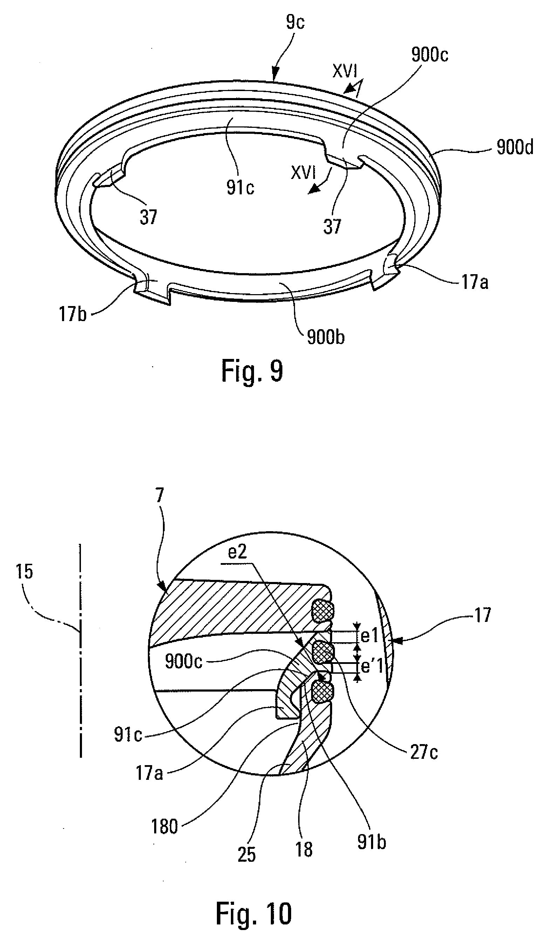

A ce sujet, on notera figure 10 que le second clapet présente une pente intérieure 91b en biais (par rapport à l'axe a priori vertical 15) avec laquelle se positionne la partie 91c de diamètre allant en se resserrant du troisième clapet va pouvoir venir en contact.

Concernant la forme générale de ce clapet 9c, on conseille donc, comme illustré notamment figures 9, 10, celle d'un d'anneau entourant un axe de révolution (axe 15), avec une partie cylindrique, où est disposé un joint extérieur radial 27c, et qui se prolonge axialement d'un côté (ici vers le bas) par une forme sensiblement tronconique.

Ainsi, sur la vanne 7, le troisième clapet 9c va pouvoir venir coiffer la partie supérieure de la chambre interne de fuite 900 du corps mobile 11, là où il forme second clapet, ce troisième clapet 9c étant lui-même surmonter par le premier, 9a, qui, appartenant à une forme discoïdale pleine, permet de fermer complètement le sommet de la chambre 900, en situations d'étanchéité.

Pour guider le troisième clapet 9c avec les contraintes de centrage et d'étanchéité affichées, différentes figures montrent que des becs de centrage, tels ceux 17a, 17b, seront favorablement prévus. Notamment figure 9, on voit que ces becs prolongent ici localement, vers le bas, la partie resserrée de l'anneau qui définit le clapet.

Ceci va être utiles lors des nettoyages.

Figures 5, 6, 12 et 7, 8, 13, on voit d'ailleurs respectivement l'une et l'autre des deux situations de nettoyage possibles:
- la première (figures 7, 8, 13) où les premier et troisième clapet 9a, 9c sont écartés axialement de manière à laisser le fluide de la première voie 3a passer entre eux et être ainsi évacué vers le bas, par l'intérieur du second clapet 9b (chambre interne de fuite 900 du corps 11) ; voir flèches. Dans la seconde voie 3b, un (autre) fluide peut circuler librement entre les entrée/sortie 5a2, 5b2,
- la seconde (figures 5, 6, 12) où les second et troisième clapets 9b, 9c sont écartés (toujours verticalement), de manière à laisser le fluide de la seconde voie 3b passer entre eux et être ainsi évacué vers le bas, à nouveau par l'intérieur creux du second clapet 9b. Dans la première voie 3a, un (autre) fluide peut circuler librement entre les entrée/sortie 5a1, 5b1.

Concernant le second clapet 9b, on aura remarqué notamment figures 2, 8, 14, qu'il sera avantageusement intégré au corps mobile creux 18 qui se développe, suivant l'axe 15, en direction de l'opposé de la zone supérieure 20 où est prévu, en positions ouverte et première position de nettoyage, le contact étanche entre les second troisièmes clapets 9b, 9c.

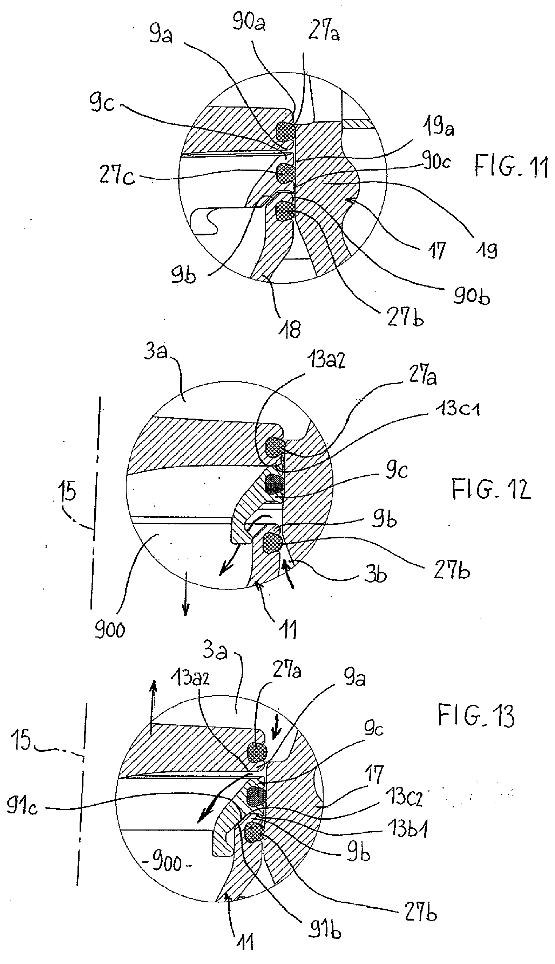

Pour favoriser l'appui étanche entre les clapets lorsqu'ils viennent en contact, on voit figures 11, 12, 13 notamment que sont prévues des surfaces de portée, respectivement 13c1, 13a2, 13c2, 13b1, globalement transversales à l'axe 15.

Pour favoriser une certaine souplesse au troisième clapet 9c on conseille qu'à l'endroit ou à proximité immédiate de chacune des surfaces de portée précitées, ce clapet présente une épaisseur e1+e'1 moindre par rapport à celle, par exemple e2, qu'il présente à l'écart bien qu'à proximité ; voir figure 10. Ceci, conjugué avec le plastique doit permettre une certaine capacité de déformation/écrasement des surfaces de portée 13c1, 13c2, favorisant un épousement des formes entre les surfaces précitées, lors des contacts.

Sur les figures 6, 8, on aura encore noté que dans les deux situations de nettoyage précitées, deux des trois clapets sont latéralement appliqués contre une surface intérieure 19a (ici cylindrique) d'une zone 19 du corps extérieur fixe 17. Le clapet restant (9a ou 9b) est par contre verticalement décalé (respectivement vers le haut et vers le bas), en direction d'une zone élargie (respectivement 21, 23), ici bombée, du corps métallique 17 (figures 5-8).

Axialement, entre les zones radialement élargies 21, 23, la zone 19 définit une partie radialement étranglée.

En position ouverte (figures 1, 2, 10), les trois clapets sont situés au niveau de la zone élargie 21, de sorte que la zone étranglée 25 que le corps mobile creux 18 présente en dessous des zones/surfaces précitées de portée inter-clapets soit alors située au niveau de la surface intérieure 19a ; zone 19.

En position fermée (figures 3, 4, 11), ils sont par contre situés plus bas et latéralement appliqués contre la surface intérieure 19a, sans toutefois être en contact par leurs dites surfaces de portée (13a2, 13c1, 13c2, 13b1).

Pour l'étanchéité radial entre les clapets et le corps extérieur fixe 17, la vanne comprend des joints annulaires d'étanchéité 27a, 27b, 27c. Chacun est disposé et fait saillie sur la périphérie extérieure, respectivement 90a, 90b, 90c, de la tranche du clapet qui le porte (voir figure 11 notamment).

Avantageusement ces trois joints seront identiques. Et ce sont ici les trois seuls joints dont sont équipés les clapets.

En position fermée, tous ces joints portent contre la surface 19a.

Par contre, en première position de nettoyage (figures 7, 8, 13), alors que le premier clapet 9a est décollé des deux autres, par montée légèrement au-dessus de la surface intérieure 19a, le premier joint 27a n'agit donc plus. Le fluide de la première voie 3a peut alors le contourner, passer entre les clapets 3a, 3b et s'écouler dans la chambre de fuite 900, laquelle est donc ouverte à ses deux extrémités axiales, et notamment en bas pour que le fluide s'échappe vers l'extérieur du dispositif, par exemple à l'égout.

En deuxième position de nettoyage (figures 5, 6, 12), c'est au tour du second clapet 9b d'être décollé des deux autres, par descente légèrement en-dessus de la surface intérieure 19a. Le joint 27b n'agit plus. Le fluide de la deuxième voie 3b peut le contourner, passer entre les clapets 9c, 9b et s'écouler dans la chambre de fuite 900.

Compte tenu de la pression du fluide, tel de l'eau, apporté dans la vanne pour ces nettoyages, du montage libre de mouvement du troisième clapet (avec toutefois l'étanchéité radiale, ici par le joint 27c) et de l'évacuation autorisée du fluide hors de la chambre 900 en bas, l'appui étanche du troisième clapet 9c contre le clapet opposé à celui qui s'ouvre va pouvoir être performant.

Utiliser, sur le troisième clapet, des surfaces de portée 13c1, 13c2 définissant respectivement des surfaces supérieure et inférieure se terminant par des parties extrêmes annulaires 130c1, 130c2 qui s'élèvent et s'abaissent respectivement pour enrober un coin respectif arrondi 130a2, 130b1 du premier et du second clapet, à la fois en positions ouverte et de nettoyage de la vanne favorisera encore les appuis étanches directs (clapet/clapet) recherchés.

Pour favoriser une limitation des turbulences et/ou des circulations inopinées de fluides pouvant survenir en position(s) de nettoyage ou quand le second clapet est monté de façon inappropriée, on a ici prévu que les bras 29 par lesquels le corps mobile creux 18 est relié à l'arbre central 31 qu'il entoure soient situés à l'écart de la zone des clapets, de préférence vers le bas du corps 18 (extrémité inférieure 18b).

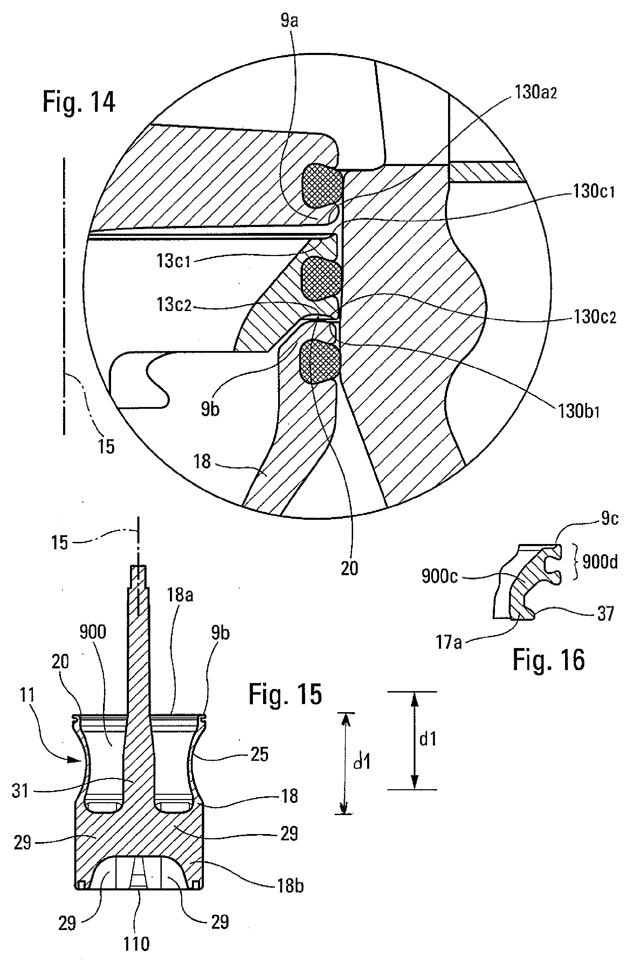

Figure 15 l'arbre central 31 est monobloc. On préférera cette réalisation à celle des figures 1, 3, 5, 7. Les bras 29 pourront être radiaux.

Si on prend en outre soin que toutes les sections horizontales de passage du fluide dans la chambre de fuite 900 soient sensiblement identiques pour favoriser l'écoulement du fluide de nettoyage sans risquer de refoulement, les caractéristiques précitées liées aux bras 29 limiteront les risques d'altération de cet écoulement, dès lors qu'un écart vertical notable existera entre la zone 20 et le sommet des bras ; distance axiale d1, fig.15.

Ainsi, dans les deux situations de nettoyage le flux fluide sera le moins possible perturbé par la présence de ces bras qui, s'ils sont trop près des clapets, peuvent créer des turbulences néfastes.

Revenant maintenant sur les aspects centrage et guidage axial du troisième clapet 9c, on conseille donc qu'avec un clapet annulaire, ceci s'effectue par la périphérie du clapet : Sur les figures, il s'agit de la périphérie extérieure 900c, par appui contre une paroi intérieure 91b/180 du corps 18.

Bien que moins efficace, une/des excroissances vers le haut du corps 18 pourraient aussi assurer cet effet, via la périphérie intérieure 900b, ou encore une jupe annulaire, tombant du clapet et pleine ou traversée d'orifices de passage du fluide considéré, pourrait venir porter contre le corps 18, en périphérie intérieure et/ou extérieure.

Un aspect de l'invention concerne d'ailleurs un procédé de fonctionnement d'un tel dispositif vanne pour fluides, multivoies, ayant cette particularité : la vanne 7 est mobile suivant l'axe 15 et, parmi ses trois clapets 9a-9c, le troisième clapet annulaire 9c est guidé en mouvement suivant ledit axe, par sa périphérie.

Comme déjà indiqué, les becs de centrage 17a... agiront à cet effet en venant extérieurement en appui localisé contre la périphérie intérieure 180 du second clapet (corps 18). Cet appui existera de préférence en toutes positions, à la différence de la liaison périphérique/radiale étanche avec la surface 19a qui s'opère en situations de nettoyage et vanne fermée.

Comme montré figures 9, 10, on recommande plusieurs (ici quatre) becs localisés en quelques endroits de la périphérie extérieure du clapet 9c, sous la partie oblique 900c.

Pour parfaire le centrage/guidage axial, on a même prévu que chaque bec de centrage, tel 17a figure 16, comprenne de préférence extérieurement un renflement 37 qui définit un tronçon d'appui (figure 9) et qui se raccorde, par une partie 900c incurvée vers l'intérieur, à une partie annulaire 900d du clapet.

Ainsi, ce troisième clapet 9c sera a priori sans liaison physique avec l'arbre central 31 qui le traverse vers le haut.

Comme on l'aura noté, c'est par ailleurs par cet arbre que le second clapet est commandé par les moyens actionneurs 39,

Figures 1, 3, 5, 7, on remarquera d'ailleurs qu'à la différence du troisième clapet toujours monté libre de mouvement entre les clapets 9a, 9b, ces derniers sont déplaçables (ici en translation, suivant l'axe 15) sous la commande directe de tels moyens actionneurs 39.

En situation vanne ouverte (figures 2), les moyens actionneurs 39 plaquent les uns contre les autres et entraînent ensemble, axialement, les trois clapets.

Ces moyens actionneurs sont actionnables pneumatiquement et disposés à l'intérieur d'une enceinte 40 située au dessus des voies. Ils sont réalisés et agissent comme suit :
Les arbres 31, 43, 45, concentriques autour de l'axe 15 et en une ou plusieurs parties assurent la transmission des mouvements jusqu'aux clapets 9a,9b.

L'arbre 43 peut être monobloc avec le disque 47 qui porte le premier clapet (supérieur) 9a. En appui, le disque 47 ferme par-dessus, à la manière d'un chapeau, l'anneau formé par le troisième clapet 9c qui coiffe l'ouverture supérieure de la chambre de fuite 900.

L'arbre 45, solidaire à sa base de l'arbre 43, est solidaire en partie supérieure d'un disque inférieur 48 agissant sur le plateau 49. Sous le plateau 49 s'étend un second plateau 51. Dans l'enceinte 40, le plateau 49 s'étend ainsi entre les chambres 41 et 53 (figure 1), le plateau 51 entre les chambres 41 et 52 (figure 7). A l'intérieur de l'arbre 45, l'arbre 31 traverse librement le plateau 51. En partie supérieure, cet arbre 31 est solidaire d'un disque supérieur 54 agissant également sur le plateau 49. Un ressort 55 s'oppose au rapprochement des disques 48, 54. Des raccords 55, 57, 59 permettent de faire varier la pression pneumatique dans les chambres 52, 41, 53, respectivement.

Ainsi, le second clapet 9b sera favorablement intégré au corps mobile creux 18 relié par les bras 29 à l'arbre central 31 qui traverse le second arbre 43 auquel est relié le premier clapet 9a (disque 47).

Pour d'autres détails structurels et de fonctionnement d'un mode favorable de réalisation des moyens d'actionnements des premier et second clapets 9a, 9b, et plus généralement de toute la structure du dispositif vanne, on se reportera aux figures jointes et, à l'exception de ce qui concerne le troisième clapet 9c, on pourra en outre se reporter aux vannes « VDCI MC » (types PFA, SP ou PMO) commercialisées, notamment en France en 2008 et 2009, par la société DEFONTAINE (DEFINOX Groupe DEFONTAINE) et/ou aux détails fournis dans les catalogues produits, tels « CAT 180 FR » (langue française), « CAT 180 GB » (langue anglaise) « CAT 180 DE » (langue allemande).

De ce qui précède, on aura compris que le dispositif vanne de l'invention comprend donc trois clapets 9a, 9b, 9c et est donc du type « triple seat valve » (clapets à sièges triple), à la différence des solutions de WO2007054131, US200900859, WO98/41786 ou US20090065077.

Comme expliqué dans ces documents, ce qui importe est à chaque fois le fonctionnement du dispositif en situations de nettoyage.

Dans la solution de l'invention, par exemple en cas de nettoyage de la voie supérieure 3a, on trouve bien cet effet de « triple seat valve » puisque, une fois le premier clapet 9a ouvert (figure 8 ou 13), le flux du liquide de nettoyage qui s'engouffre dans la chambre de fuite 900 pousse vers le bas le troisième clapet 9c (axe 15) qui, libre mais en frottement contre la paroi 19a, vient naturellement buter de façon étanche contre le deuxième clapet 9b maintenu fixe (position fermée). Il y a alors une triple étanchéité en ce sens où :
- le troisième clapet 9c est en liaison étanche avec la paroi 19a du corps (joint 27c),
- juste en dessous, le deuxième clapet 9b est également en liaison étanche avec la paroi 19a du corps (joint 27b),
- et ces deuxième et troisième clapets sont en outre en liaison étanche entre eux, par leurs surfaces de surfaces de portée 13b1, 13c2.

Ainsi, le deuxième clapet 9b jouera dans ce cas à la fois le rôle de moyen de fermeture dans son contact avec son siège radial 19a et de siège axial (en 13b1) pour le troisième clapet.

La liaison étanche entre les deuxième et troisième clapets évite donc en particulier les risques de remontée de liquide de nettoyage qui peuvent survenir dans certaines conditions limites et/ou à certaines pressions.

En cas de nettoyage de la voie inférieure 3b, on fera le même constat entre les clapets 9a et 9c (plaqué vers le haut) et la même paroi 19a ; cf. figures 6, 12.

En liaison avec cette triple étanchéité et la remarque faite dans US20090065077 vis-à-vis de la solution de WO2007054131 qui oblige à une différence de diamètres entre les sièges radiaux des premier et second clapets (références 4, 3 dans WO'131), on a justement ici prévu de donner de préférence des diamètres différents à la paroi 19a, suivant que l'on se situe à l'endroit du siège des premier et troisième clapets 9a et 9c, ou de celui du second clapet 9b.

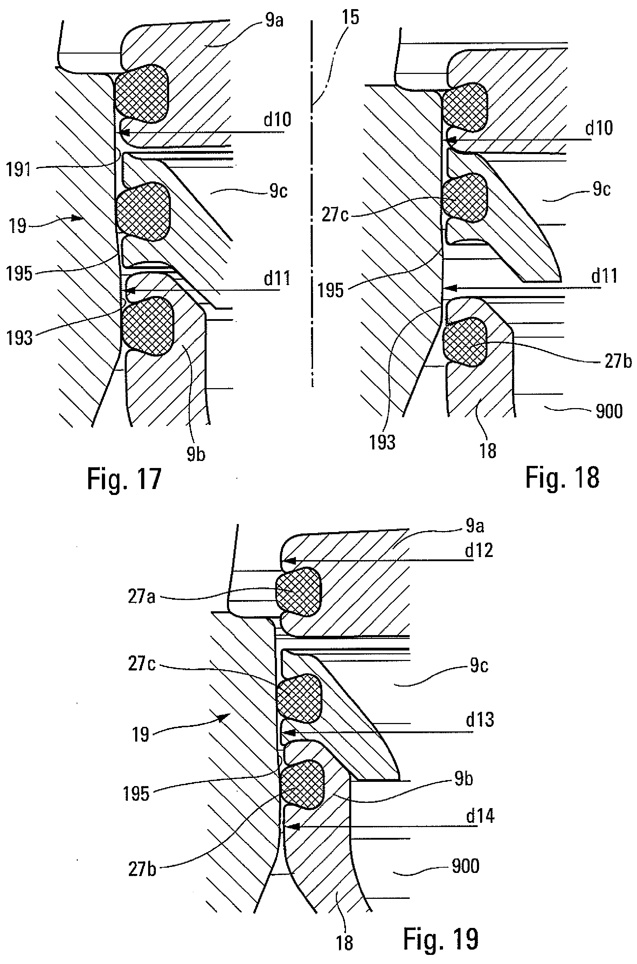

Sur les figures 17-19, on voit ainsi que le diamètre intérieur d10 du corps fixe 19 (siège 191) est supérieur de quelques dixièmes de mm à 2mm à celui d11 à l'endroit du siège 193 du second clapet. Entre ces deux cylindres, on trouve une pente oblique 195 définissant un tronc de cône.

En correspondance, les diamètres extérieurs (respectivement d12 et d14) des premier et troisième clapets 9a, 9c seront identiques, celui d13 du second inférieur de quelques dixièmes de mm à 2mm.

Si, comme on le conseille, les joints 27a, 27b, 27c, chacun monté sur la tranche périphérique d'un de ces clapets, sont identiques, alors ce qui précède sera aussi vérifié pour les diamètres extérieurs, joints compris.

En résumé, on conseille :
- que les premier, second et troisième clapets soient mobiles entre lesdites positions que peut occuper la vanne 7 suivant l'axe 15 commun de déplacement, à l'intérieur du corps extérieur fixe 19 avec, de haut en bas, les premier, troisième puis second clapets, ce dernier appartenant au corps creux 19, pour y assurer un écoulement d'un fluide de rinçage dans la chambre 900,
- que les clapets portent respectivement un premier, second et troisième joints en périphérie extérieure, les diamètres respectifs des premier et second joints étant identiques, celui du troisième joint étant inférieur aux deux précédents et le corps fixe présentant .
   * un premier diamètre intérieur d10 contre lequel portent :
      - les premier et troisième clapets 9a, 9b dans ladite position fermée,
      - et le troisième clapet 9c dans les deux situations possibles de nettoyage,
   * et, plus bas, un deuxième diamètre intérieur d11, inférieur au premier et contre lequel porte le second clapet 9b en position fermée de la vanne et dans l'une des positions de nettoyage où le premier clapet 9a est ouvert, au-dessus dudit premier diamètre,
- et que les moyens actionneurs 39 déplacent les clapets vers la position ouverte en les montant au-dessus du premier diamètre intérieur du corps fixe (figures 1, 2, 10).

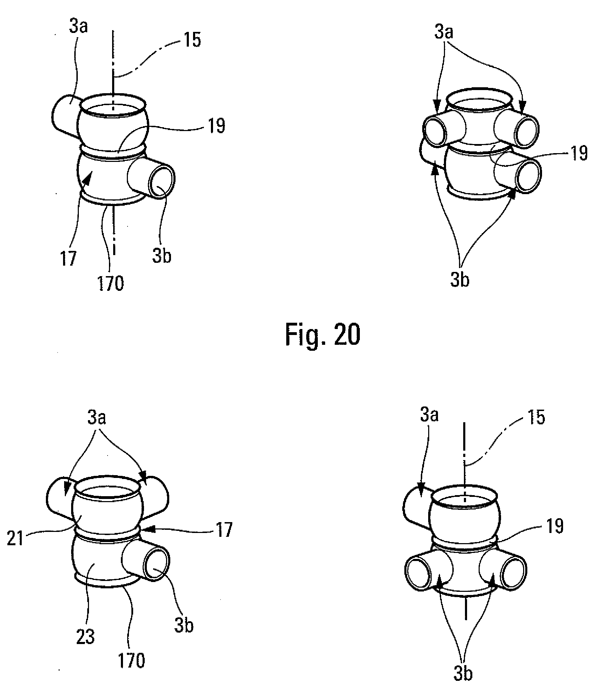

Figure 20, plusieurs exemples de dispositions des voies 3a, 3b sont illustrées, avec une ou plusieurs, voire aucune, entrée(s), de même pour les sorties ; d'autres exemples existent, pour peu qu'on trouve une chambre de fuite au centre de la vanne montée mobile entre les voies supérieure et inférieure 3a, 3b. Chaque chambre de fuite 900 communique ici avec l'extérieur à travers le fond ouvert 170 du corps extérieur 17 (figure 20) dans lequel débouche donc le fond, lui-même ouvert, 110 du corps intérieur mobile 11 (figures 3, 15).

## Revendications

1. Dispositif vanne (1) comprenant une première et une seconde voies (3a, 3b) de circulation de fluides qui sont ou non mises en communication en fonction de la position d'une vanne mobile (7) montée entre elles et mobiles suivant un axe (15), la vanne comprenant :
- un premier et un second clapets (9a, 9b) dont l'un appartient à un corps mobile creux (11, 18) traversé par une chambre de fuite (900) et auxquels des arbres axiaux (31, 43, 45), dont un arbre central (31), transmettent un mouvement axial, les premiers et seconds clapets (9a, 9b) étant conçus et montés pour :
• interdire une communication entre les première et seconde voies, dans une position fermée de la vanne (7),
• autoriser une communication entre les première et seconde voies (3a, 3b), autour des premier et second clapets (9a, 9b), dans une position ouverte de la vanne,
• interdire la communication entre lesdites première et seconde voies, tout en autorisant une communication entre l'une seulement de ces voies et la chambre de fuite (900), dans deux situations de nettoyage possibles, et
- un troisième clapet (9c) disposé entre les premier et second clapets,
**caractérisé en ce que** :
- le troisième clapet (9c) est sans liaison physique avec ledit arbre central (31) qui le traverse, de sorte que le troisième clapet (9c) est axialement mobile indépendamment du mouvement transmis par les arbres (31, 43, 45),
- il définit une liaison étanche:
• avec le premier clapet (9a), dans la première situation de nettoyage, en venant alors porter contre ledit premier clapet (9a) et ;
• avec le second clapet (9b) dans la seconde situation de nettoyage, en venant alors porter contre ledit second clapet (9b), et
- dans les deux situations de nettoyage, deux des clapets (9a,9b,9c) sont latéralement appliqués contre une surface intérieure (19a) d'une zone (19) d'un corps extérieur fixe (17), la vanne (7) étant montée mobile dans ledit corps (17).

2. Dispositif vanne selon la revendication 1, **caractérisé en ce que** le troisième clapet présente des surfaces de portée (13c1, 13a2, 13c2, 13b1), transversal à l'axe (15), les surfaces de portées étant agencées pour se déformer et s'écraser lors des contacts avec l'un au moins des premiers et seconds clapets (9a, 9b).

3. Dispositif vanne selon la revendication 2, **caractérisé en ce que** les surfaces de portée (13c1, 13a2, 13c2, 13b1) définissent respectivement, par rapport à l'axe (15) s'étendant verticalement, des surfaces inférieure et supérieure qui se terminent par des parties extrêmes annulaires (130c1, 130c2) lesquelles s'élèvent et s'abaissent respectivement pour enrober un coin respectif arrondi (130a2, 130b1) que présente les premier et second clapets (9a, 9b), à la fois en positions ouverte et de nettoyage de la vanne (7).

4. Dispositif vanne selon la revendication 1, **caractérisé en ce que** le troisième clapet (9c) est monté, libre de mouvement en situations de nettoyage, entre les premier et second clapets (9a, 9b), lesquels sont déplaçables sous la commande de moyens actionneurs (39), et le troisième clapet (9c) est guidé dans ses mouvements par appui contre le premier ou second clapet (9a, 9b).

5. Dispositif vanne selon l'une des revendications précédentes, **caractérisé en ce que** ladite vanne (7) est mobile suivant l'axe (15) et le troisième clapet (9c) est annulaire et guidé en libre mouvement suivant ledit axe, vers sa périphérie extérieure, par :
- contact radial avec l'un des premier et second clapets (9a, 9b), et,
- en situations de nettoyage et par une liaison étanche, avec une paroi intérieure (19a) du corps fixe (19) dans lequel la vanne (7) est montée mobile.

6. Dispositif vanne selon l'une des revendications précédentes, **caractérisé en ce que** les premier et second clapets (9a, 9b) sont en métal, le troisième clapet (9c) étant en, ou comprenant en surface, une matière plastique adaptée à assurer une étanchéité auxdits fluides par appui étanche sans joint, dans les deux situations de nettoyage, contre les premier ou second clapets, respectivement.

7. Dispositif vanne selon l'une des revendications précédentes, **caractérisé en ce que** le troisième clapet (9c) est en Peek.

8. Dispositif vanne selon l'une des revendications précédentes, **caractérisé en ce que** :
- les premier et second clapets (9a, 9b) sont mobiles entre lesdites positions, suivant un axe commun de déplacement (15),
- et le troisième clapet (9c) disposé entre eux est pourvu de becs de centrage (17a, 17b) en périphérie extérieure, de manière à venir extérieurement en appui localisé contre la périphérie intérieure du second clapet (9b) qui appartient au corps creux (11, 18).

9. Dispositif vanne selon la revendication 8, **caractérisé en ce que** chaque bec de centrage comprend extérieurement un renflement (37) qui définit un tronçon d'appui et qui se raccorde par une partie incurvée (900c) vers l'intérieur à une partie annulaire (900d) du clapet.

10. Dispositif vanne selon l'une des revendications précédentes, **caractérisé en ce que** :
- les premier, second et troisième clapets (9a, 9b, 9c) s'étendent transversalement à un axe vertical (15) le long duquel ils sont mobiles, avec, de haut en bas, le premier, le troisième et le second clapets, et,
- le troisième clapet (9c) présente une forme avec un diamètre se resserre vers le bas et qui se prolonge là, localement, encore davantage vers le bas par des becs de centrage (17a, 17b) s'appuyant contre le second clapet.

11. Dispositif vanne selon l'une des revendications précédentes, **caractérisé en ce que** les premier, second et troisième clapets (9a, 9b, 9c) comprennent chacun un seul joint d'étanchéité (27a, 27b, 27c), ces trois joints étant identiques et montés respectivement sur une tranche périphérique de chaque clapet, pour l'étanchéité entre chacun d'eux et un corps extérieur fixe (17) dans lequel la vanne (7) est montée mobile.

12. Dispositif vanne selon la revendication 6 ou les revendications 6 et 7, **caractérisé en ce que** les premier, second et troisième clapets (9a, 9b, 9c) comprennent chacun un joint d'étanchéité (27a, 27b, 27c), chacun monté sur une tranche périphérique d'un desdits clapets et les diamètres extérieurs des premier et troisième clapets (9a, 9c) sont identiques, de même que ceux de leurs joints (27a, 27b, 27c).

13. Dispositif vanne selon la revendication 4, **caractérisé en ce que** :
- les premier, second et troisième clapets (9a, 9b, 9c) sont mobiles entre lesdites positions suivant un axe commun de déplacement (15), à l'intérieur d'un corps extérieur fixe (17) avec, de haut en bas, les premier, troisième puis second clapets, ce dernier appartenant audit corps creux (11, 18), pour y assurer un écoulement d'un fluide de rinçage, les clapets (9a, 9b, 9c) portant respectivement un premier, second et troisième joints (27a, 27b, 27c) en périphérie extérieure, les diamètres respectifs des premier et second joints (27a, 27b) étant identiques, celui du troisième joint (27c) étant inférieur aux deux précédents et le corps fixe (17) présentant :
* un premier diamètre intérieur (d10) contre lequel portent .
. les premier et troisième clapets (9a, 9c) dans ladite position fermée,
. et le troisième clapet (9c) dans deux situations de nettoyage,
* et, plus bas un deuxième diamètre intérieur (d11), inférieur au premier (d10) et contre lequel porte le second clapet (9b) en position fermée de la vanne (7) et dans l'une des positions de nettoyage où le premier clapet (9a) est ouvert, au-dessus dudit premier diamètre (d10),
- et les moyens actionneurs (39) déplacent les clapets (9a,9b,9c) vers la position ouverte en les montant au-dessus du premier diamètre intérieur (d10) du corps fixe (17).

14. Dispositif vanne selon les revendications 4 et 10, **caractérisé en ce que** le troisième clapet (9c) présente une gorge sur sa tranche périphérique extérieure où est disposé un joint (27a, 27b, 27c) pour, tant en position fermée que de nettoyage, assurer une étanchéité audit fluide par contact avec un corps extérieur fixe (17) dans lequel se déplace la vanne (7).

## Patentansprüche

1. Ventilvorrichtung (1), die einen ersten Kanal und einen zweiten Kanal (3a, 3b) für die Zirkulation von Fluiden umfasst, die in Abhängigkeit von der Position eines beweglichen Ventils (7), das zwischen ihnen montiert ist und sich entlang einer Achse (15) bewegen kann, in Kommunikation sind oder nicht, wobei das Ventil Folgendes umfasst:
- eine erste und eine zweite Ventilklappe (9a, 9b), von denen eine zu einem hohlen beweglichen Körper (11, 18) gehört, durch den eine Leckkammer (900) passiert und zu denen axiale Wellen (31, 43, 45), einschließlich einer zentralen Welle (31), eine axiale Bewegung übertragen, wobei die erste und zweite Ventilklappe (9a, 9b) ausgelegt und montiert sind zum:
• Verhindern einer Kommunikation zwischen dem ersten und dem zweiten Kanal in einer geschlossenen Position des Ventils (7);
• Zulassen einer Kommunikation zwischen dem ersten und dem zweiten Kanal (3a, 3b) um die erste und die zweite Ventilklappe (9a, 9b) in einer offenen Position des Ventils;
• Verhindern der Kommunikation zwischen dem ersten und zweiten Kanal, dabei Zulassen einer Kommunikation zwischen nur einem dieser Kanäle und der Leckkammer (900) in zwei möglichen Reinigungssituationen; und
- eine dritte Ventilklappe (9c), die zwischen der ersten und der zweiten Ventilklappe angeordnet ist,
**dadurch gekennzeichnet, dass**:
- die dritte Ventilklappe (9c) keine physikalische Verbindung mit der zentralen Welle (31) hat, die durch sie verläuft, so dass die dritte Ventilklappe (9c) unabhängig von der von den Wellen (31, 43, 45) übertragenen Bewegung axial beweglich ist,
- sie eine dichte Verbindung definiert:
• mit der ersten Klappe (9a), in der ersten Reinigungssituation, um dann an der ersten Ventilklappe (9a) zur Anlage zu kommen; und
• mit der zweiten Ventilklappe (9b), in der zweiten Reinigungssituation, um dann an der zweiten Ventilklappe (9b) zur Anlage zu kommen; und
- in den beiden Reinigungssituationen werden zwei der Ventilklappen (9a, 9b, 9c) seitlich gegen eine Innenfläche (19a) einer Zone (19) eines festen Außenkörpers (17) appliziert, wobei das Ventil (7) beweglich in dem Körper (17) montiert ist.

2. Ventilvorrichtung nach Anspruch 1, **dadurch gekennzeichnet, dass** die dritte Ventilklappe Lagerflächen (13c1, 13a2, 13c2, 13b1) transversal zur Achse (15) hat, wobei die Lagerflächen so ausgelegt sind, dass sie verformt und zusammengedrückt werden, wenn sie mit der ersten und/oder der zweiten Ventilklappe (9a, 9b) in Kontakt sind.

3. Ventilvorrichtung nach Anspruch 2, **dadurch gekennzeichnet, dass** die Lagerflächen (13c1, 13a2, 13c2, 13b1) jeweils, relativ zu der vertikal verlaufenden Achse (15), untere und obere Flächen definieren, die an ringförmigen Endteilen (130c1, 130c2) enden, die jeweils so ansteigen und abfallen, dass sie jeweils eine abgerundete Ecke (130a2, 130b1) der ersten und zweiten Ventilklappe (9a, 9b) sowohl in der offenen als auch in der Reinigungsposition des Ventils (7) bedecken.

4. Ventilvorrichtung nach Anspruch 1, **dadurch gekennzeichnet, dass** die dritte Ventilklappe (9c) zwischen der ersten und der zweiten Ventilklappe (9a, 9b) in Reinigungssituationen frei beweglich montiert ist, wobei diese Ventilklappen über einen Befehl von Stellmitteln (39) bewegt werden können, und die Bewegungen der dritten Ventilklappe (9c) durch Anlage an der ersten oder zweiten Ventilklappe (9a, 9b) geführt werden.

5. Ventilvorrichtung nach einem der vorherigen Ansprüche, **dadurch gekennzeichnet, dass** das Ventil (7) entlang der Achse (15) beweglich ist und die dritte Ventilklappe (9c) ringförmig ist und in freier Bewegung entlang der Achse zu ihrer Außenperipherie hin geführt wird, durch:
- radialen Kontakt mit der ersten oder zweiten Ventilklappe (9a, 9b); und
- in Reinigungssituationen und durch eine dichte Verbindung, mit einer Innenwand (19a) des festen Körpers (19), in der das Ventil (7) beweglich montiert ist.

6. Ventilvorrichtung nach einem der vorherigen Ansprüche, **dadurch gekennzeichnet, dass** die erste und zweite Ventilklappe (9a, 9b) aus Metall bestehen, wobei die dritte Ventilklappe (9c) aus einem Plastikmaterial besteht oder auf ihrer Oberfläche ein Plastikmaterial aufweist, so ausgelegt, dass es Dichtigkeit gegen die Fluide durch dichte Anlage ohne Dichtung in den beiden Reinigungssituationen jeweils gegen die erste oder zweite Ventilklappe gewährleistet.

7. Ventilvorrichtung nach einem der vorherigen Ansprüche, **dadurch gekennzeichnet, dass** die dritte Ventilklappe (9c) aus Peek gefertigt ist.

8. Ventilvorrichtung nach einem der vorherigen Ansprüche, **dadurch gekennzeichnet, dass**:
- die erste und zweite Ventilklappe (9a, 9b) sich zwichen den Positionen entlang einer gemeinsamen Verschiebungsachse (15) bewegen können; und
- die zwischen ihnen angeordnete dritte Ventilklappe (9c) an der Außenperipherie mit Zentrierspitzen (17a, 17b) versehen ist, so dass sie extern mit der Innenperipherie der zweiten Ventilklappe (9b) lokal in Anlage kommt, die zu dem hohlen Körper (11, 18) gehört.

9. Ventilvorrichtung nach Anspruch 8, **dadurch gekennzeichnet, dass** jede Zentrierspitze außen eine Ausbauchung (37) aufweist, die einen Anlageabschnitt definiert und sich über einen gekrümmten Teil (900c) nach innen an einen ringförmigen Teil (900d) der Ventilklappe anschließt.

10. Ventilvorrichtung nach einem der vorherigen Ansprüche, **dadurch gekennzeichnet, dass**:
- die erste, zweite und dritte Ventilklappe (9a, 9b, 9c) transversal zu einer vertikalen Achse (15) verlaufen, entlang der sie sich mit, von oben nach unten, der ersten, dritten und zweiten Ventilklappe bewegen können; und
- die dritte Ventilklappe (9c) eine Form mit einem sich nach unten verjüngenden Durchmesser hat und der lokal sogar weiter abwärts an diesem Punkt über Zentrierspitzen (17a, 17b) verläuft, die an der zweiten Ventilklappe anliegen.

11. Ventilvorrichtung nach einem der vorherigen Ansprüche, **dadurch gekennzeichnet, dass** die erste, zweite und dritte Ventilklappe (9a, 9b, 9c) jeweils eine einzige Dichtung (27a, 27b, 27c) umfassen, wobei die drei Dichtungen identisch und jeweils an einem peripheren Abschnitt jeder Ventilklappe für die Dichtigkeit jeder von ihnen und einem festen Außenkörper (17) montiert sind, in dem das Ventil (7) beweglich montiert ist.

12. Ventilvorrichtung nach Anspruch 6 oder nach den Ansprüchen 6 bis 7, **dadurch gekennzeichnet, dass** die erste, zweite und dritte Ventilklappe (9a, 9b, 9c) jeweils eine Dichtung (27a, 27b, 27c) umfassen, die jeweils an einem peripheren Abschnitt von einer der Ventilklappen montiert ist, und die Außendurchmesser der ersten und dritten Ventilklappe (9a, 9c) sowie die ihrer Dichtungen (27a, 27b, 27c) identisch sind.

13. Ventilvorrichtung nach Anspruch 4, **dadurch gekennzeichnet, dass**:
- die erste, zweite und dritte Ventilklappe (9a, 9b, 9c) zwischen den Positionen entlang einer gemeinsamen Verschiebungsachse (15) innerhalb eines festen externen Körpers (17) mit, von oben nach unten, der ersten, dritten, dann zweiten Ventilklappe beweglich sind, wobei Letztere zu dem hohlen Körper (11, 18) gehört, um einen Fluss eines Spülfluids durch das Ventil zuzulassen, wobei die Ventilklappen (9a, 9b, 9c) jeweils eine erste, zweite und dritte Dichtung (27a, 27b, 27c) auf der externen Peripherie tragen, wobei die jeweiligen Durchmesser der ersten und zweiten Dichtung (27a, 27b) identisch sind, wobei der der dritten Dichtung (27c) kleiner ist als der der beiden vorherigen Dichtungen, und wobei der feste Körper (17) Folgendes hat:
* einen ersten Innendurchmesser (d10), an dem sich Folgendes abstützt:
• die erste und dritte Ventilklappe (9a, 9c) in der geschlossenen Position; und
• die dritte Ventilklappe (9c) in zwei Reinigungssituationen; und
• weiter unten ein zweiter Innendurchmesser (d11), der kleiner ist als der erste (d10) und an dem die zweite Ventilklappe (9b) in der geschlossenen Position des Ventils (7) und in einer der Reinigungspositionen anliegt, in der die erste Ventilklappe (9a) offen ist, über dem ersten Durchmesser (d10); und
- die Stellmittel (39) die Ventilklappen (9a, 9b, 9c) durch Heben über den ersten Innendurchmesser (d10) des festen Körpers (17) in die offene Position bewegen.

14. Ventilvorrichtung nach den Ansprüchen 4 und 10, **dadurch gekennzeichnet, dass** die dritte Ventilklappe (9c) eine Rille an ihrem äußeren peripheren Abschnitt hat, wo eine Dichtung (27a, 27b, 27c) angeordnet ist, um sowohl in der geschlossenen Position als auch in der Reinigungsposition Dichtigkeit gegenüber dem Fluid durch Kontakt mit einem festen Außenkörper (17) bereitzustellen, in dem sich das Ventil (7) bewegt.

## Claims

1. A valve device (1) comprising a first and a second channel (3a, 3b) for circulating fluids, which channels may or may not communicate with each other as a function of the position of a movable valve (7) that is mounted between said channels and can move along an axis (15), said valve device comprising:
- a first and a second valve-flap (9a, 9b), one of which belongs to a hollow movable body (11, 18), through which a leak chamber (900) passes, and to which an axial movement is transferred by axial shafts (31, 43, 45) including a central shaft (31), said first and second valve-flaps (9a, 9b) being designed and mounted to:
• prevent communication between said first and second channels in a closed position of said valve (7);
• allow communication between said first and second channels (3a, 3b), about said first and second valve-flaps (9a, 9b), in an open position of said valve;
• prevent communication between said first and second channels, whilst allowing communication between only one of said channels and said leak chamber (900), in two possible cleaning situations; and
- a third valve-flap (9c) disposed between said first and second valve-flaps,
**characterised in that**:
- said third valve-flap (9c) does not have a physical link with said central shaft (31) that passes through said valve-flap, so that said third valve-flap (9c) can axially move independently of the movement transferred by said shafts (31, 43, 45),
- it defines a sealed connection:
• with said first valve-flap (9a), in the first cleaning situation, by then coming into abutment against said first valve-flap (9a); and
• with said second valve-flap (9b), in the second cleaning situation, by then coming into abutment against said second valve-flap (9b); and,
- in the two cleaning situations, two of said valve-flaps (9a, 9b, 9c) are laterally applied against an internal surface (19a) of a zone (19) of a fixed external body (17), said valve (7) being mounted in a mobile manner inside said body (17).

2. The valve device according to claim 1, **characterised in that** said third valve-flap has bearing surfaces (13c1, 13a2, 13c2, 13b1) transversal to said axis (15), said bearing surfaces being arranged so as to deform and compress when in contact with at least one of said first and second valve-flaps (9a, 9b).

3. The valve device according to claim 2, **characterised in that** said bearing surfaces (13c1, 13a2, 13c2, 13b1) respectively define, relative to said vertically extending axis (15), lower and upper surfaces that are terminated by terminal annular parts (130c1, 130c2), which respectively rise and fall so as to cover a respective rounded corner (130a2, 130b1) having said first and second valve-flaps (9a, 9b), both in the open and cleaning positions of said valve (7).

4. The valve device according to claim 1, **characterised in that** said third valve-flap (9c) is mounted between said first and second valve-flaps (9a, 9b) so as to freely move during cleaning situations, which valve-flaps can be moved by a command from actuating means (39), and the movements of said third valve-flap (9c) are guided by bearing against said first or said second valve-flap (9a, 9b).

5. The valve device according to any one of the preceding claims, **characterised in that** said valve (7) can move along said axis (15) and said third valve-flap (9c) is annular and is guided to freely move along said axis, towards its external periphery, by:
- radial contact with one of said first and second valve-flaps (9a, 9b); and
- by a sealed connection, during cleaning situations, with an internal wall (19a) of said fixed body (19), in which said valve (7) is mounted in a mobile manner.

6. The valve device according to any one of the preceding claims, **characterised in that** said first and second valve-flaps (9a, 9b) are made of metal, said third valve-flap (9c) being, or comprising on its surface, a plastic material adapted to provide sealing against fluids by means of a tight abutment without a seal, in the two cleaning situations, against said first or second valve-flaps, respectively.

7. The valve device according to any one of the preceding claims, **characterised in that** said third valve-flap (9c) is made of Peek.

8. The valve device according to any one of the preceding claims, **characterised in that**:
- said first and second valve-flaps (9a, 9b) can move between said positions along a common displacement axis (15); and
- said third valve-flap (9c), which is disposed between said first and second valve-flaps, is provided with centring points (17a, 17b) on the outer periphery, so as to externally come into local abutment against said internal periphery of said second valve-flap (9b) that belongs to said hollow body (11, 18).

9. The valve device according to claim 8, **characterised in that** each centring point externally comprises a boss (37) that defines a bearing section and that is connected via a section (900c) that is curved inwardly towards an annular section (900d) of said valve-flap.

10. The valve device according to any one of the preceding claims, **characterised in that**:
- said first, second and third valve-flaps (9a, 9b, 9c) transversally extend to a vertical axis (15), along which they can move with, from top to bottom, said first, said third and said second valve-flaps; and
- said third valve-flap (9c) has a shape with a diameter that tapers downwards and that locally extends even further downwards at this point via centring points (17a, 17b) bearing against said second valve-flap.

11. The valve device according to any one of the preceding claims, **characterised in that** said first, second and third valve-flaps (9a, 9b, 9c) each comprise a single seal (27a, 27b, 27c), said three seals being identical and being respectively mounted on a peripheral section of each valve-flap to provide the seal between each of said valve-flaps and a fixed external body (17), in which said valve (7) is mounted in a mobile manner.

12. The valve device according to claim 6 or to claims 6 to 7, **characterised in that** said first, second and third valve-flaps (9a, 9b, 9c) each comprise a seal (27a, 27b, 27c), each of which is mounted on a peripheral section of one of said valve-flaps, and the outer diameters of said first and third valve-flaps (9a, 9c) are identical, as are those of their seals (27a, 27b, 27c).

13. The valve device according to claim 4, **characterised in that**:
- said first, second and third valve-flaps (9a, 9b, 9c) can move between said positions along a common displacement axis (15) inside a fixed external body (17) with, from top to bottom, said first, third, then second valve-flaps, said second valve-flap belonging to said hollow body (11, 18), in order to allow a rinsing fluid to flow through said valve, said valve-flaps (9a, 9b, 9c) respectively having a first, second and third seal (27a, 27b, 27c) on the external periphery, the respective diameters of said first and second seals (27a, 27b) being identical, the diameter of said third seal (27c) being less than that of the two preceding seals and said fixed body (17) having:
* a first internal diameter (d10), against which the following are supported:
• said first and third valve-flaps (9a, 9c) in said closed position; and
• said third valve-flap (9c) in two cleaning situations; and
• lower down, a second internal diameter (d11), less than said first diameter (d10), and against which said second valve-flap (9b) bears in the closed position of said valve (7) and in one of the cleaning positions where said first valve-flap (9a) is open, above said first diameter (d10); and
- said actuator means (39) move said valve-flaps (9a, 9b, 9c) to the open position by lifting them above said first internal diameter (d10) of said fixed body (17).

14. The valve device according to claims 4 and 10, **characterised in that** said third valve-flap (9c) has a groove on its external peripheral section, with a seal (27a, 27b, 27c) being disposed on said groove so as to provide, both in the closed and in the cleaning position, a seal for said fluid through contact with a fixed external body (17), in which said valve (7) moves.
